**Europäisches Patentamt**

**European Patent Office**

**Office européen des brevets**

(19)

(11) Veröffentlichungsnummer: **0 055 349**
**A2**

(12) # EUROPÄISCHE PATENTANMELDUNG

(21) Anmeldenummer: **81108614.9**

(22) Anmeldetag: **21.10.81**

(51) Int. Cl.³: **H 01 M 10/44**
**H 02 J 7/04**

(30) Priorität: **27.12.80 DE 3049211**

(43) Veröffentlichungstag der Anmeldung:
**07.07.82 Patentblatt 82/27**

(84) Benannte Vertragsstaaten:
**AT BE FR GB IT NL SE**

(71) Anmelder: **VARTA Batterie Aktiengesellschaft**
**Am Leineufer 51**
**D-3000 Hannover 21(DE)**

(72) Erfinder: **Winsel, August, Prof. Dr.**
**Fasanenstrasse 8a**
**D-6233 Kelkheim/Ts(DE)**

(74) Vertreter: **Kaiser, Dieter Ralf, Dipl.-Ing. . et al,**
**Gundelhardtstrasse 72**
**D-6233 Kelkheim/Ts.(DE)**

(54) **Verfahren zur Regelung des Ladestromes von galvanischen Elementen mit Rekombination der beim Laden entstehenden Gase.**

(57) Ein Akkumulator mit Rekombinationskatalysator wird so lange mit verhältnismäßig hohem konstanten Strom geladen, bis im Zeitpunkt $t_1$ an den Elektroden Gasentwicklung einsetzt. Anschliessend wird mit herabgesetztem Strom zunächst ohne Gasung weitergeladen bis im Zeitpunkt $t_2$ erneut Gasentwicklung eintritt, woraufhin der Ladestrom wiederum reduziert wird. Der nach jeder erneuten Gasentwicklung reduzierte Ladestrom ist dabei jeweils von der Differenz zwischen der restlichen Kapazität des Akkumulators und der bereits eingeladenen Kapazität abhängig. Der Ladestrom wird gemäß Kurve A stufenweise zu den Zeitpunkten $t_1$ bis $t_4$ reduziert. Es ist jedoch auch möglich, gemäß Kurve B den Ladestrom in einer stetigen Funktion über der Zeit t kontinuierlich abzusenken, wobei der Strom in Abhängigkeit von der registrierten nichteingeladenen Kapazität knapp unterhalb des Ladegrenzstromes, bei dem keine Gasung mehr einsetzt, gehalten wird.

Der Gasungszustand wird mit Hilfe der Rekombinatortemperatur gemessen. Es ist jedoch auch möglich, mit Hilfe der Druckanstiegsrate innerhalb des Akkumulators die Gasentwicklung festzustellen.

EP 0 055 349 A2

Croydon Printing Company Ltd.

./...

Fig. 3

Reg.-Nr. 6 FP 375-EP    6233 Kelkheim, den 25.09.1981
EAP-Ga/sd

VARTA Batterie Aktiengesellschaft
3000 Hannover 21, Am Leineufer 51

## Verfahren zur Regelung des Ladestromes von galvanischen Elementen mit Rekombination der beim Laden entstehenden Gase.

Die Erfindung betrifft ein Verfahren zur Regelung des Ladestromes von galvanischen Elementen mit Rekombination der beim Laden entstehenden Gase, insbesondere Bleiakkumulatoren und Nickel-Cadmium-Zellen, mit einer Reduzierung des Ladestromes bei Gasentwicklung, wobei zur Festlegung des Reduzierungszeitpunktes der Beginn der Gasentwicklung gemessen wird.

Bei der Aufladung von Akkumulatoren tritt am Ende der Ladephase Gasentwicklung an den Elektroden auf, wenn der aufgezwungene Ladestrom größer ist als der an einer Elektrode während der Ladereaktion verbrauchte Strom. Zum besseren Verständnis sei an den modellmäßigen Entladevorgang erinnert, nach dem sowohl an der negativen als auch an der positiven Elektrode bei der Entladung Bleisulfat entsteht, das durch Diffusion über die Elektrolytphase in den Poren auskristallisiert. Die Diffusion erfolgt im Übersättigungsgebiet, da unmittelbar an der Bleiionen bildenden Oberfläche die Lösung übersättigt ist, während sie an der Oberfläche der wachsenden Bleisulfatkristalle im Sättigungsgleichgewicht ist. Umgekehrt findet die Ladung im Untersättigungsbereich statt, da an der Oberfläche der sich auflösenden Bleisulfatkristalle die Lösung gesättigt ist, während an der Bleiionen verbrauchenden Bleioberfläche die Konzentration mit wachsendem Strom gegen Null geht. Die höchstmögliche Diffusionsleistung wird durch die innere geometrische Anordnung der Bleisulfatkristallite in der großoberflächigen porösen Elektrode durch den Diffusionswiderstand und die Übersättigungskonzentration nach dem ersten Fickschen Gesetz bestimmt. Wird nun durch zu hohen Ladestrom die Diffusionsleistung überschritten, bildet sich an der negativen Elektrode Wasserstoff und an der positiven Sauerstoff. Durch Bildung der Gase wird der Elektrolyt aus den Poren verdrängt, woraus sich eine Störung bzw. Unterbrechung der Ladereaktion ergeben kann.

Aus der DE-PS 26 38 899 ist ein Verfahren zur Reduzierung des Ladestromes bei Gasentwicklung bekannt, nach dem zur Feststellung des Gasungsbereiches die Temperatur der Rekombination der entstandenen Sauerstoff- und Wasserstoffgase zu Wasser gemessen und als Regelgröße verwendet wird. Dabei wird die Zeit der Hauptladestromphase bis zur Batteriegasung gespeichert und in einem bestimmten Übersetzungsverhältnis als Zeitvorgabe zur Begrenzung der Dauer der Nachladestromphase ausgenutzt. Als Beispiel ist ein während der Hauptladezeit vorlaufendes Zeitwerk angegeben, das die Nachladestromphase mit einem vorgewählten Ablaufverhältnis durch Rücklauf des Zeitwerkes begrenzt.

Als nachteilig erweist sich bei diesem Verfahren die verhältnismäßig lange Nachladephase, da zur Schonung der Batterie nur mit einem kleinen Ladestrom gearbeitet werden kann.

Aufgabe der Erfindung ist es, mit einem möglichst hohen Strom in der Nachladephase die Batterie in verhältnismäßig kurzer Zeit bis zum gewünschten endgültigen Ladezustand zu bringen. Als Kriterium für die Stromstärke soll dabei die Gasentwicklung an wenigstens einer Elektrode dienen.

Die Aufgabe wird dadurch gelöst, daß der Ladestrom bei Erreichen des Gasungszustandes wenigstens einer Elektrode bis zur erneuten Gasentwicklung auf einen geringeren Wert herabgesetzt wird, der von der Differenz zwischen Restkapazität und eingeladener Kapazität abhängig ist.

In einer bevorzugten Ausführungsform wird der Ladestrom in mehreren Stufen herabgesetzt. Es ist jedoch auch möglich,die Stufeninvervalle beliebig zu verringern und den Ladestrom in quasi infinitesimaler Stufenfolge einzuladen.

Im folgenden ist das erfindungsgemäße Verfahren anhand von Diagrammen näher erläutert. Figur 1 zeigt den zeitlichen Verlauf der Restkapazitäten beim Aufladen; in Figur 2 ist der zeitliche Verlauf des Ladegrenzstromes im Verhältnis zum 10stündigen Ladestrom angegeben, wobei auf der Ordinate ein logarithmischer Maßstab gewählt worden ist. In Figur 3 ist der zeitliche Verlauf des Ladestromes dargestellt.

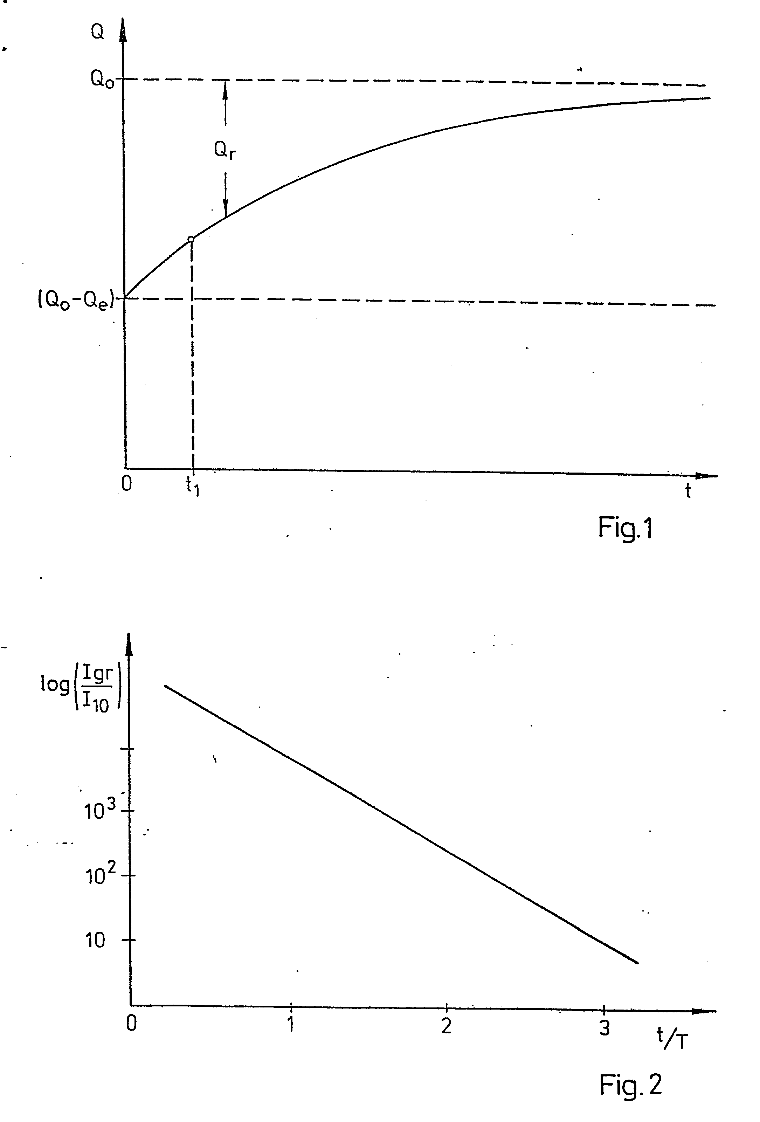

Gemäß Figur 1 ist mit $Q_0$ die Ladungsmenge des vollgeladenen Akkumulators angegeben. Zu Beginn der Ladung im Zeitpunkt $t = 0$ beträgt die noch vorhandene Ladungsmenge der Differenz zwischen dieser Ladungsmenge $Q_0$ und der entnommenen Kapazität $Q_e$.

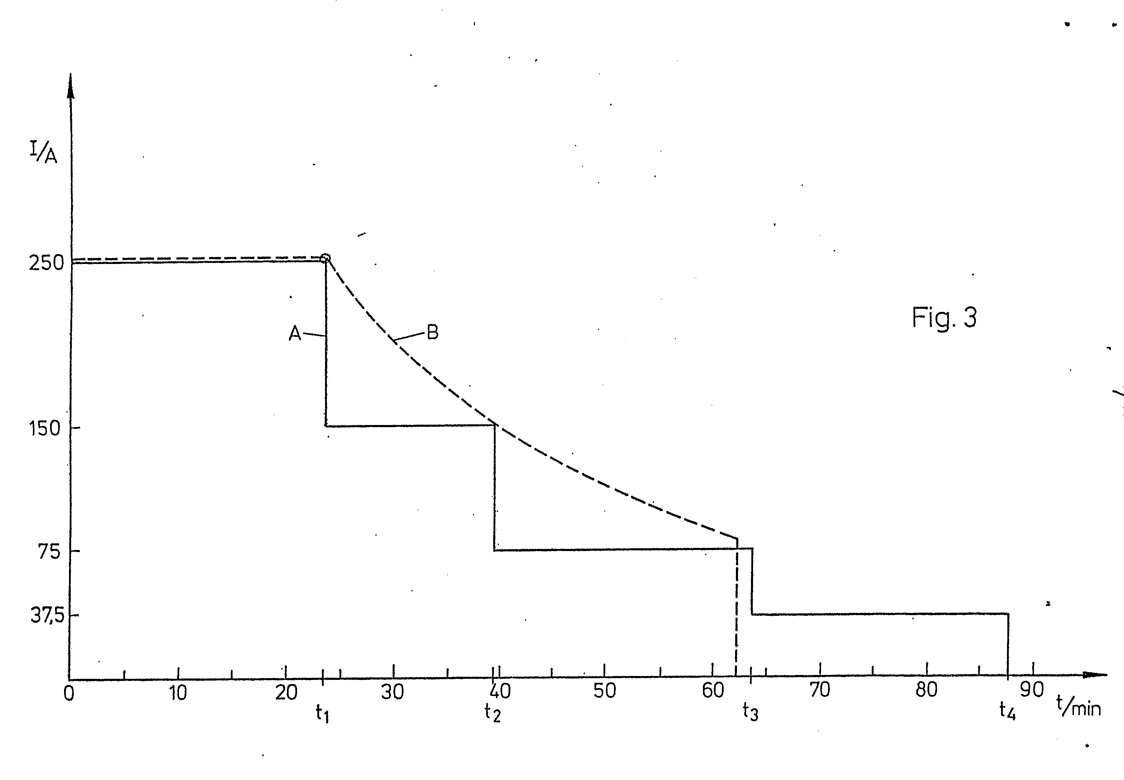

Die entnommene Kapazität $Q_e$ entspricht der einzuladenden Restkapazität $Q_r$. In der Hauptladephase wird - wie im folgenden in Figur 3 näher erläutert - der Ladestrom konstant gehalten, so daß die Kapazitätszunahme bis zum Einsetzen der Gasentwicklung im Zeitpunkt $t_1$ annähernd linear ansteigend verläuft. Der Zeitpunkt $t_1$ wird durch Messung des Druckanstieges bzw. der Druckanstiegsrate festgelegt. Hierzu erweist sich insbesondere das Überschreiten einer vorgegebenen Rekombinatortemperatur als geeignet. Es ist jedoch auch möglich, das Überschreiten einer vorgegebenen Temperaturrate des Rekombinators als Schaltkriterium für den Zeitpunkt $t_1$ einzusetzen. Weiterhin ist es möglich, auch Gasdruckmeßeinrichtungen zur Festlegung des Zeitpunktes $t_1$ zu benutzen.

Nach Erreichen des Zeitpunktes $t_1$ wird die Konstantstromladung beendet und der Ladestrom herabgesetzt. Dabei wird der Ladegrenzstrom nach in Figur 2 dargestellter Funktion $\log(I_{gr}/I_{10})$

über der Zeit t herabgesetzt. Die Zeit T ist abhängig vom Zusammenhang der Restkapazitäten $Q_r$ und dem Ladegrenzstrom $I_{gr}$. Die Ladung mit dem herabgesetzten Ladestrom kann gemäß der Kurve A in Figur 3 erfolgen; es ist jedoch auch möglich, den Strom in einer quasi infinitesimalen Stufenfolge als Funktion der nicht eingeladenen Kapazität abzusenken. Im folgenden ist ein Beispiel anhand der Ladekurven A und B näher erläutert.

Eine Bleiakkumulatorenbatterie von 180 Zellen für die Elektrotraktion besitzt eine Nennkapazität von 450 Ah. Sie soll nach einer Entnahme von 200 Ah mit 250 A geladen werden. In der ersten Ladephase wird für 24 min bis zum Zeitpunkt $t_1$ ein konstanter Strom von 250 A zugeführt. Im Zeitpunkt $t_1$ übersteigt die Spannung den Wert von 2,4 V/Zelle und daraufhin beginnt die Gasung. Dies bedeutet, daß die nicht eingeladene Restkapazität von 100 Ah mit einem Ladegrenzstrom von 250 A bei 40°C verknüpft ist. Im Zeitpunkt $t_1$ wird der Strom auf 150 A herabgesetzt. Nach 16 min Ladezeit wird der Zeitpunkt $t_2$ erreicht, bei welchem wiederum die Gasung beginnt. Im Zeitpunkt $t_2$ sind weitere 40 Ah eingeladen, so daß die Restkapazität bei beginnender Gasung 60 Ah beträgt. Nunmehr wird der Strom auf 75 A gesenkt. Nach 24minütiger Ladung beträgt bei beginnender Gasung im Zeitpunkt $t_3$ die Restkapazität 30 Ah. Danach wird der Strom auf 37,5 A gesenkt, verbunden mit einem Gasungsbeginn nach 24 min bei einer Restkapazität von 15 Ah. Die Reskapazitäten $Q_r$ liegen als Funktion des Grenzstromes $I_{gr}$ auf einer Geraden, die naturgemäß typenabhängig ist. Daneben wirken sich auch der Alterungszustand und die Betriebstemperatur auf das Gasungsverhalten aus.

Anstelle einer Absenkung in Stufen gemäß Kurve A ist es auch möglich, gemäß Kurve B bei quasi infinitesimaler Stufenfolge den Ladestrom als Funktion der nicht eingeladenen Kapazität einzuladen. Dies geschieht, indem ein streng linearer Zusammenhang zwischen der Restkapazität $Q_r$ und dem Grenzstrom $I_{gr}$ hergestellt wird. Die rechnerische Darstellung erfolgt nach der

- 5 -

Funktion
$$Q_r(t) = \frac{Q_r(t_1)}{I_{gr}(t_1)} \; I_{gr}(t) \; .$$

Gemäß Kurve B wird zunächst ebenso wie nach Kurve A die Batterie mit einem konstanten Strom von 250 A bis zum Zeitpunkt der Gasentwicklung $t_1$ geladen. Nach Erreichen des Zeipunktes $t_1$ gilt der oben erläuterte Zusammenhang zwischen dem Ladegrenzstrom $I_{gr}$ und der Restkapazität $Q_r$. Nach Kurve B wird nun der Ladestrom stets knapp unterhalb des Ladegrenzstromes in einer kontinuierlichen Folge abgesenkt. Diese kontinuierliche Absenkung entspricht im Prinzip einem Kurvenverlauf gemäß Kurve A bei infinitesimal kleinen Stufenfolgen, wobei der Strom entsprechend der registrierten, nicht eingeladenen Kapazität proportional gesteuert wird. Die Eingabe der nicht eingeladenen Kapazität kann mit einem Strom integrierenden Ampere-Stundenzähler erfolgen. Es ist jedoch auch möglich, im Bleiakkumulator die Säuredichte der Schwefelsäure zu messen, da diese nach dem Coulometrischen Prinzip alle in Lade- und Entladerichtung fließenden Ströme registriert. Zur Messung der Säuredichte kann beispielsweise eine Ionenaustauschermembran verwendet werden. Es ist jedoch auch möglich, andere elektromagnetische oder mechanische Meßvorrichtungen einzusetzen.

Die Steuerung des Ladestromes I nach dem Zeitpunkt $t_1$ erfolgt nach folgender Funktion:

$$I = I_1 \exp \left\{ - \frac{I_1 (t - t_1)}{Q_e - I_1 t_1} \right\}$$

Hierin ist $Q_e$ die entnommene Kapazität, $I_1$ der konstante Ladestrom der ersten Ladestufe, $t_1$ die Zeit bis zum Beginn der starken Gasentwicklung an einer der beiden Elektroden.

Der hier dargestellte proportionale Zusammenhang zwischen Grenzstrom $I_{gr}$ und nicht eingeladener Kapazität $Q_r$ ist nicht immer erfüllt. Jedoch gilt die dargestellte Tendenz des mit $Q_r$ abfallenden Ladegrenzstroms. Daher sind prinzipielle Zusammenhänge des Verfahrens nach wie vor gültig.

Patentansprüche

1. Verfahren zur Regelung des Ladestromes von galvanischen Elementen mit Rekombination der beim Laden entstehenden Gase, insbesondere Bleiakkumulatoren und Nickel-Cadmium-Zellen, mit einer Reduzierung des Ladestromes bei Gasentwicklung, wobei zur Festlegung des Reduzierungszeitpunktes der Beginn der Gasentwicklung gemessen wird, dadurch gekennzeichnet, daß der Ladestrom (I) bei Erreichen des Gasungszustandes wenigstens einer Elektrode bis zur erneuten Gasentwicklung auf einen geringeren Wert herabgesetzt wird, der von der Differenz zwischen Restkapazität $(Q_r)$ und eingeladener Kapazität $(Q_e)$ abhängig ist.

2. Verfahren nach Anspruch 1, dadurch gekennzeichnet, daß der Gasungszustand durch die Höhe der Rekombinationstemperatur festgelegt ist.

3. Verfahren nach Anspruch 1, dadurch gekennzeichnet, daß der Gasungszustand mit Hilfe der Druckanstiegsrate gemessen wird.

4. Verfahren nach einem der vorhergehenden Ansprüche, dadurch gekennzeichnet, daß der Ladestrom (I) wenigstens einmal herabgesetzt und bis zur erneuten Gasentwicklung konstant gehalten wird.

5. Verfahren nach einem der vorhergehenden Ansprüche, dadurch gekennzeichnet, daß der Ladestrom (I) nach Durchlaufen einer Konstantstromphase kontinuierlich herabgesetzt wird.

0055349

Fig.1

Fig. 2

Fig. 3